(19) **Europäisches Patentamt**
**European Patent Office**
**Office européen des brevets**

(11) **EP 4 576 762 A1**

(12) **EUROPEAN PATENT APPLICATION**
published in accordance with Art. 153(4) EPC

(43) Date of publication:
**25.06.2025 Bulletin 2025/26**

(21) Application number: **22957523.8**

(22) Date of filing: **15.11.2022**

(51) International Patent Classification (IPC):
*H04N 9/31* (2006.01)          *G03B 21/14* (2006.01)
*G06T 7/13* (2017.01)

(52) Cooperative Patent Classification (CPC):
**G03B 21/14; G06T 7/13; H04N 9/31**

(86) International application number:
**PCT/KR2022/018001**

(87) International publication number:
**WO 2024/048846 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.08.2022 KR 20220109337**

(71) Applicant: **LG Electronics Inc.**
**Yeongdeungpo-gu**
**Seoul 07336 (KR)**

(72) Inventors:
• **CHO, Yongkook**
  **Seoul 06772 (KR)**
• **YOON, Woongbae**
  **Seoul 06772 (KR)**
• **YOU, Sungmin**
  **Seoul 06772 (KR)**
• **KIM, Hyunseok**
  **Seoul 06772 (KR)**

(74) Representative: **Schornack, Oliver**
**Wuesthoff & Wuesthoff**
**Patentanwälte und Rechtsanwalt PartG mbB**
**Schweigerstraße 2**
**81541 München (DE)**

(54) **IMAGE PROJECTION DEVICE AND IMAGE PROJECTION CONTROL METHOD**

(57)     An image projection device may comprise: a ToF sensor configured to measure a distance to a target; a lamp assembly configured to output an image signal including a pattern image; an operation unit which controls the lens assembly to move in one axis direction; and a processor which measures a distance to a screen by means of the ToF sensor and controls the pattern image outputted through the lamp assembly to be projected on the screen. The processor may calculate a sharpness value of the pattern image projected on the screen through the lamp assembly, and adjust the size of the pattern image and a position at which the pattern image is projected on the basis of the calculated sharpness value.

*FIG. 4A*

# Description

## Technical Field

This specification relates to an image projection device and an image projection control method. A specific implementation relates to an automatic calibration method of an image projection device.

## Background Art

An image projection device, such as a projector, is connected to a computer or electronic device and configured to project an input image onto a screen. As image projection devices, such as projectors, have become smaller recently, the image projection devices are allowed to be installed at fixed locations and in a movable manner. In this regard, there is a problem that users must manually adjust the focus, screen placement/size, and sharpness each time the image projection device to be movably installed is installed at a specific location.

Accordingly, there is a problem in that the size, arrangement, and sharpness of an image projected on a screen may change depending on the skill of a user who installs and operates the image projection device. To address this problem, the image projection device needs to be controlled so that the focus, screen placement/size, and sharpness are automatically adjusted each time the image projection device is installed or powered on.

## Disclosure of Invention

## Technical Problem

This specification is intended to solve the above-mentioned problems and other drawbacks, and one aspect of the specification is to provide an image projection device and an image projection control method.

Another aspect of the specification is to provide an automatic calibration method for an image projection device.

Still another aspect of the specification is to automatically adjust focus, screen placement/size, and sharpness each time an image projection device, which may be movably installed, is installed at a specific location.

Still another aspect of the specification is to control an image projection device to automatically adjust focus, screen placement/size, and sharpness each time the image projection device is installed or powered on.

## Solution to Problem

To achieve the above or other purposes, there is provided an image projection device including: a time-of-flight (ToF) sensor configured to measure a distance to a target; a lamp assembly configured to output an image signal including a pattern image; an operation unit configured to control the lens assembly to move in one axial direction; and a processor configured to control the ToF sensor to measure a distance to a screen and the lamp assembly to project the output pattern image onto the screen. The processor may calculate a sharpness value of the pattern image projected on the screen through the lamp assembly, and adjust a size of the pattern image and a position on which the pattern image is projected based on the calculated sharpness value.

According to an embodiment, the processor may control an operation unit to move the lamp assembly based on the measured distance and a focal position from the screen.

According to an embodiment, the image projection device may further include a camera configured to capture an image of the screen or a marker associated with the pattern image. The processor may detect, based on deep learning, coordinates of corner points of the screen or the marker associated with the pattern image and a reliability value associated with detection accuracy of the coordinates, and detect vertical and horizontal linear components based on the corner points, to determine which of the corner points is an optimal corner point for detecting the screen or the marker. The processor may control the operation unit to move the lens assembly based on a distance from a center point of the ToF sensor to the optimal corner point.

According to an embodiment, the processor may control the marker associated with the pattern image to be generated and projected through the lamp assembly in case that the detection of the screen based on the deep learning fails, and detect the coordinates of the corner points of the projected marker and reliability value through the camera.

According to an embodiment, the processor may determine whether lines of upper, lower, one end, and another end of the screen are obtainable from a point of view of the camera, determine whether a surface of the screen is expressed with a uniform color within a certain range, and determine whether there is a portion obscured by a person or other object in a first region, which is a display region of the screen. The processor may detect the coordinates of the corner points of the screen and the reliability value based on the deep learning in case that it is determined that the lines of the screen are obtainable, the surface is expressed with the uniform color, and there is no obscured portion in the first region.

According to an embodiment, the processor may measure the distance to the screen based on a center point of the ToF sensor, measure a first sharpness value of the pattern image while moving the lamp assembly in a certain direction to a first position adjacent to a target position in case that the measured distance is shorter than a ToF effective distance, and measure a second sharpness value of the pattern image while moving the lamp assembly to a second position corresponding to the ToF effective distance in case that the measured distance is equal to or longer than the ToF effective distance. The processor may adjust the size of the pattern image and the position on which the pattern image is projected based on the measured first sharpness value and second sharpness value.

According to an embodiment, the processor may compare a first region, which is a display region of the screen, and a second region, which is a projection region where the pattern image is projected, and perform a first zooming operation to move the focal position to the first position, to control the second region to be larger than the first region by at least a certain ratio. The processor may extract a first center point of the first region and a second center point of the second region, adjust a center position of the pattern image so that the second center point of the second region moves to the first center point of the first region, and perform a second zooming operation so that the focal position moves to the second position in a state that the center position has been adjusted.

According to an embodiment, the processor may measure the first sharpness value or the second sharpness value through the first zooming operation by a first interval in one axial direction, and measure the first sharpness value or the second sharpness value by a second interval narrower than the first interval in the one axial direction through the second zooming operation, to finely adjust the focal position so that the focal position moves to the second position in the state that the center position has been adjusted.

According to an embodiment, the processor may determine a mapping matrix P which defines a transformation relationship between a source image frame of the pattern image and a projected image frame projected on the screen, and determine a pre-warping matrix W which rectifies the projected image frame to a certain shape on the screen. The processor may transform the source image frame based on the pre-warping matrix W, such that the transformed source image frame is projected in the certain shape onto the screen.

According to an embodiment, the processor may detect the screen to detect four corner points, and determine a first mapping matrix T which defines a transformation relationship between the source image frame and a camera image frame based on the four detected corner points.

According to an embodiment, the processor may determine a second mapping matrix C which rectifies the projected image frame projected on the detected screen to the certain shape, from a point of view of the camera, based on the four detected corner points.

According to an embodiment, the processor may determine a mapping matrix P as $C^{-1}T$ based on the first mapping matrix T and the second mapping matrix C. The processor may determine optimal points for adjusting offset and scale of the image (rectified screen) rectified to the certain shape, and determine whether the offset and scale of the rectified image are appropriate based on coordinates of optimal points and coordinates of corresponding points of an image before being rectified to the certain shape.

According to an embodiment, the processor may estimate the projected image frame before the image rectified to the certain shape, by applying $C^{-1}$, which is an inverse transformation of the second mapping matrix C, to the camera image frame.

According to an embodiment, the processor may control an image frame transformed by multiplying the source image frame by the pre-warping matrix W to be projected as the projected image frame of the certain shape on the screen.

According to an embodiment, the processor may perform an evaluation associated with a degree to which the projected image frame has been rectified to the certain shape by detecting corner points of the projected image frame. The processor may rectify the mapping matrix P to P1 based on a distance difference between the coordinates of the detected corner points and coordinates of optimal corner points for the rectification to the certain shape, and rectify the pre-warping matrix to W1 based on the rectified mapping matrix P1. The processor may transform the source image frame based on the pre-warping matrix W1, such that the transformed source image frame is projected in the certain shape onto the screen.

According to an embodiment, the image projection device may further include a user input unit configured to receive a user input so that calibration of the pattern image projected on the screen is performed. The processor may control, based on the user input, a center position of the projected image frame to be a certain distance from a center position of the screen on one axis of the screen while the projected image frame projected on the screen is displayed in the certain shape.

An image projection control method for controlling a pattern image to be output, according to another aspect of the specification, may be performed by a processor of a projector. The control method may include a screen/marker detection process of detecting a screen or a marker associated with the pattern image; an operation control process of controlling an operation unit to move a lamp assembly based on a distance to the screen measured through a time of flight (ToF) sensor and a focal position from the screen; a sharpness value calculation process of calculating a sharpness value of the pattern image projected onto the screen through the lamp assembly; and a pattern image size/position adjustment process of adjusting a size of the pattern image and a position on which the pattern image is projected based on the calculated sharpness value.

According to an embodiment, the screen/marker detection process may be configured to detect, based on deep learning, coordinates of corner points of the screen or the marker associated with the pattern image and a reliability value associated with detection accuracy of the coordinates, and detect vertical and horizontal linear components based on the corner points, to determine which of the corner points is an optimal corner point for detecting the screen or the marker.

According to an embodiment, the control method may further include a zoom/position adjustment process of adjusting a position by comparing a first region, which is a display region of the screen, with a second region, which is a projection region in which the pattern image is projected, after the sharpness value calculation process is performed. The zoom/position adjustment process may be to perform a first zooming operation to move the focal position to a first position, to control the second region to be larger than the first region by at least a certain ratio. The zoom/position adjustment process may be to extract a first center point of the first region and a second center point of the second region, adjust the center position of the pattern image so that the second center point of the second region moves to the first center point of the first region, and perform a second zooming operation so that the focal position moves to a second position in a state that the center position has been adjusted.

According to an embodiment, the pattern image size/position adjustment process may be to determine a mapping matrix P which defines a transformation relationship between a source image frame of the pattern image and a projected image frame projected on the screen, and determine a pre-warping matrix W which rectifies the projected image frame to a certain shape on the screen. The pattern image size/position adjustment process may be configured to transform the source image frame based on the pre-warping matrix W, that the transformed source image frame is projected in the certain shape onto the screen.

According to an embodiment, the pattern image size/position adjustment process may be to control an image frame transformed by multiplying the source image frame by the pre-warping matrix W to be projected as a projected image frame of the certain shape onto the screen, and perform an evaluation associated with a degree to which the projected image frame has been rectified to the certain shape by detecting corner points of the projected image frame.

### Advantageous Effects of Invention

The technical effects of an image projection device and an image projection control method according to the specification will be described.

According to an embodiment, an image projection control method may be provided based on sharpness of a pattern image measured by controlling an operation of a lens assembly according to a measured distance to a screen.

According to an embodiment, an automatic calibration method for an image projection device may be provided by adjusting a size and projected position of a pattern image based on a calculated sharpness value.

According to an embodiment, focus, screen placement/size, and sharpness may be automatically adjusted each time an image projection device, which may be movably installed, is installed at a specific location.

According to an embodiment, an image projection device may be controlled so that focus, screen placement/size, and sharpness are automatically adjusted each time the image projection device is installed or powered on.

Further scope of applicability of the disclosure will become apparent from the following detailed description. It should be understood, however, that the detailed description and specific examples, such as the preferred embodiments, are given by way of illustration only, because various changes and modifications within the technical idea and scope of the disclosure will be apparent to those skilled in the art.

### Brief Description of Drawings

FIG. 1 is a block diagram of an image projection device according to the specification.

FIG. 2 is a perspective view of a projector according to an embodiment.

FIG. 3 is a view of an optical system of a projector according to an embodiment.

FIG. 4A is a block diagram of an image projection device that performs calibration for a projected image according to the specification and an image projection system including the same.

FIG. 4B is a view of a detailed configuration of the image projection device of FIG. 4A.

FIG. 5A is a flowchart of a method of measuring sharpness based on a measurement distance according to the specification.

FIG. 5B is a conceptual diagram of a method of measuring sharpness by filtering-based edge component detection according to an embodiment.

FIG. 5C is a view of a pattern including edge components in several directions for sharpness component extraction according to the specification.

FIG. 6 is a flowchart of a method for adjusting size and position of a pattern image, performed in an image projection device according to the specification.

FIG. 7 is a conceptual diagram illustrating that a pattern image formed through an image projection device according to the specification is displayed as a projected image projected on a screen.

FIG. 8 is a view of a transformation relationship between a source image frame and a projected image frame in relation to an image projection device according to the specification.

FIG. 9 is a flowchart of a keystone calibration method for an image projection device according to the specification.

FIG. 10 is a view of a structure of determining a mapping parameter in relation to projector-camera calibration according to the specification and an example of a pattern image related to the structure.

FIG. 11A is a view of a configuration for performing a screen region detection algorithm in an image projection device according to the specification.

FIG. 11B is a view of information associated with a decoder output of FIG. 11A and a screen detection result.

FIG. 12 is a view of a configuration for detecting a screen region through a pattern image displayed on a screen according to the specification.

FIG. 13 is a view of a configuration for detecting markers in an image projection device that does not use a screen according to the specification.

FIG. 14 is a flowchart of an image projection control method of controlling an output of a pattern image according to the specification.

## Mode for the Invention

A description will now be given in detail according to one or more embodiments disclosed herein, with reference to the accompanying drawings. For the sake of a brief description with reference to the drawings, the same or like components regardless reference numerals may be assigned the same reference numeral, and a redundant description thereof will be omitted. Suffixes "module" and "unit" used for elements disclosed in the following description are merely intended for easy description of the specification, and each suffix itself is not intended to give any special meaning or function. In describing the embodiments disclosed herein, moreover, the detailed description will be omitted when a specific description for publicly known technologies to which the disclosure pertains is judged to obscure the gist of the disclosure. The accompanying drawings are used to help easily understand the technical idea of the disclosure and it should be understood that the idea of the disclosure is not limited by the accompanying drawings. The idea of the present disclosure should be construed to extend to any alterations, equivalents, and substitutes besides the accompanying drawings.

It will be understood that although the terms first, second, and the like may be used herein to describe various elements, these elements should not be limited by these terms. These terms are generally only used to distinguish one element from another.

It will be understood that when an element is referred to as being "connected with" another element, the element may be connected with the another element or intervening elements may also be present. In contrast, when an element is referred to as being "directly connected with" another element, there are no intervening elements present.

The singular forms are intended to include the plural forms as well, unless the context clearly indicates otherwise.

The term "include" or "has" as used herein should be understood that it is intended to indicate the existence of a feature, a number, a step, an element, a component, or a combination thereof disclosed in the specification, and it may also be understood that the existence or additional possibility of one or more other features, numbers, steps, elements, components, or combinations thereof are not excluded in advance.

An electronic device described herein may be applied to stationary terminals, such as digital TVs, desktop computers, kiosks, and digital signages. In particular, the electronic device described herein may be applied to a contactless image projection device, i.e., an image display device, such as a kiosk or digital signage.

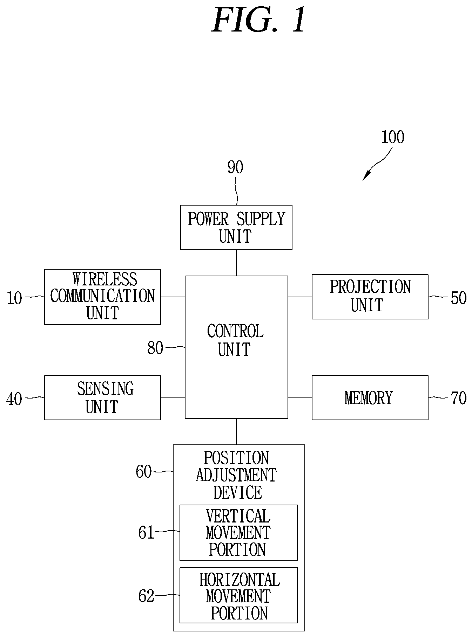

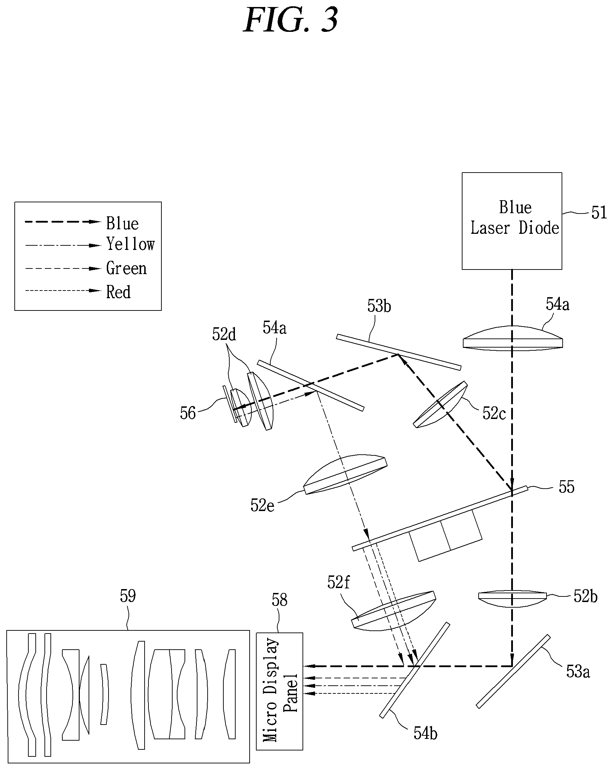

FIG. 1 is a block diagram of an image projection device according to the specification. The image projection device of FIG. 1 may be, but is not limited to, a projector. Referring to FIG. 1, the image projection device 100 may include a wireless communication unit 10, a sensing unit 40, a projection unit 50, a position adjustment unit 60, and a power supply unit 90. It will be understood that implementing all of the illustrated components illustrated in FIG. 3 is not a requirement, and that greater or fewer components may alternatively be implemented.

The wireless communication unit 10 may transmit and receive signals using a mobile communication module or a short-range communication module. In some embodiments, the wireless communication unit 10 may transmit and receive certain commands or certain information with an external terminal. Alternatively, the wireless communication unit 10 may receive images, such as photos and videos, from an external terminal. The wireless communication unit 10 may provide a function of controlling the projector 100 using a short-range communication module wirelessly, such as using a remote controller. The wireless communication unit 10 may receive broadcast signals and/or broadcast-related information from an external broadcast management server through a broadcast channel using a broadcast reception module. The wireless communication unit 10 may acquire a current location of the projector 100 using a location information module.

The sensing unit 40 may sense presence or absence of an object approaching a predetermined surface to be detected, or an object located near the surface, by using force of an electromagnetic field, infrared rays, or the like without mechanical contact.

The projection unit 50 may have a function of projecting an image signal and may also be called an optical system. The projection unit 50 may be implemented as a configuration that includes a light source 51 supplying light, a transmission-type image projection device, or the like. The projection unit 50 may include a projection lens 59 for adjusting the size of a projected image on a projection region.

The position adjustment unit 60 may perform a function of adjusting a direction in which the projector 100 projects an image. In some embodiments, the position adjustment unit 60 may perform a function of adjusting a position of the projection unit 50. To this end, the position adjustment unit 60 may include a vertical movement portion 61 and a horizontal movement portion 62. The vertical movement portion 61 may move the projection unit 50 up and down, and the horizontal movement portion 62 may move the projection unit 50 left and right. A camera 20, the sensing unit 40, and/or the projection unit 50 of the projector 100 may move up, down, left, and right by the position adjustment unit 60.

The memory 70 may store an image to be projected, surrounding space information, and/or projection region information.

The control unit 80 may interoperate with the wireless communication unit 10, the sensing unit 40, the projection unit 50, the position adjustment unit 60, and/or the memory 70 to analyze a surrounding space structure, analyze a projection region, perform image correction, and project an image or transmit and receive signals with an external terminal. For example, the control unit 80 may control one or a combination of those components to implement various embodiments disclosed herein.

The power supply unit 90 may receive external power or internal power and supply appropriate power required for operating respective elements and components under the control of the control unit 80. The power supply unit 90 may include a detachable battery.

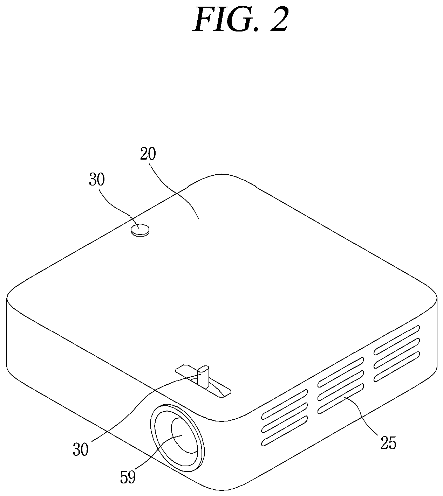

FIG. 2 is a perspective view of a projector according to an embodiment. A housing 20 of the projector 100 and the projection lens 59 exposed on the front surface of the housing 20 are illustrated. Vent holes 25 may be formed through a side surface of the housing to dissipate heat generated by heat-generating components, such as the light source 51, arranged in the housing 20. A focal point of a lens or a projection direction may be adjusted by a manipulation unit 30 exposed to the outside of the housing.

The housing 20 may include therein the wireless communication unit 10, the sensing unit 40, the projection unit 50, the memory 70, the control unit 80, and the power supply unit 90. Light emitted from the light source 51 may be synthesized with image information on a display element 58, and radiated through the projection lens 59, such that an image appears on a screen or wall.

FIG. 3 is a view of an optical system of a projector according to an embodiment. The optical system 50 of the projector 100 may use a laser diode as the light source 51. Laser light emitted from the laser diode may have the same wavelength. Accordingly, the laser light may have a high energy density, a constant phase, and linearity, so that brightness may be enhanced. The laser diode may also have a lifespan which is longer than that of the related art lamp or light-emitting diode. Therefore, the light source 21 may have an extended lifespan, low manufacturing costs, and compact size, which may reduce the size of the projector 100. Laser light has a specific wavelength and blue light is more efficient than green light. Therefore, using a laser diode emitting blue light may be more advantageous in terms of efficiency.

In some embodiments, an image projection device configured to project an image according to the specification may be controlled so that an image projected on a screen is automatically calibrated. With regard to this, an image projection device, such as a projector, may be connected to a computer or electronic device to project an input image onto a screen. As image projection devices, such as projectors, have become smaller recently, the image projection devices are allowed to be installed at fixed locations and in a movable manner. In this regard, there is a problem that users must manually adjust the focus, screen placement/size, and sharpness each time the image projection device to be movably installed is installed at a specific location.

Accordingly, there is a problem that the size, arrangement, and sharpness of a projected image projected on the screen may change depending on the skill of the user who installs and operates the image projection device. To address this problem, the image projection device needs to be controlled so that the focus, screen placement/size, and sharpness are automatically adjusted each time the image projection device is installed or powered on.

This specification is intended to solve the above-mentioned problems and other drawbacks, and one aspect of the specification is to provide an image projection device and an image projection control method. Another aspect of the specification is to provide an automatic calibration method for an image projection device. Still another aspect of the specification is to automatically adjust focus, screen placement/size, and sharpness each time an image projection device, which may be installed movably, is installed at a specific location. Still another aspect of the specification is to control an image projection device to automatically adjust focus, screen placement/size, and sharpness each time the image projection device is installed or powered on.

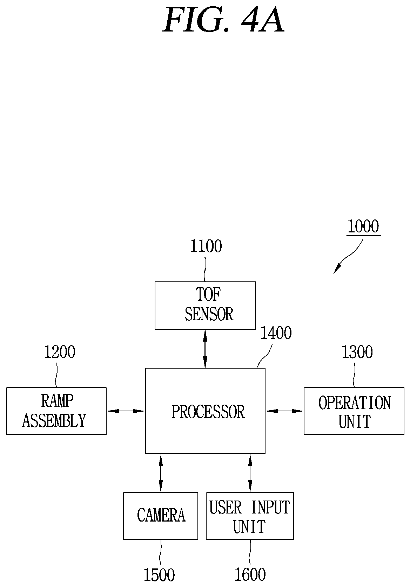

Hereinafter, FIG. 4A is a block diagram of an image projection device that performs calibration for a projected image according to the specification and an image projection system including the same. In this regard, FIG. 4A is a view of a detailed configuration of the image projection device of FIG. 4A.

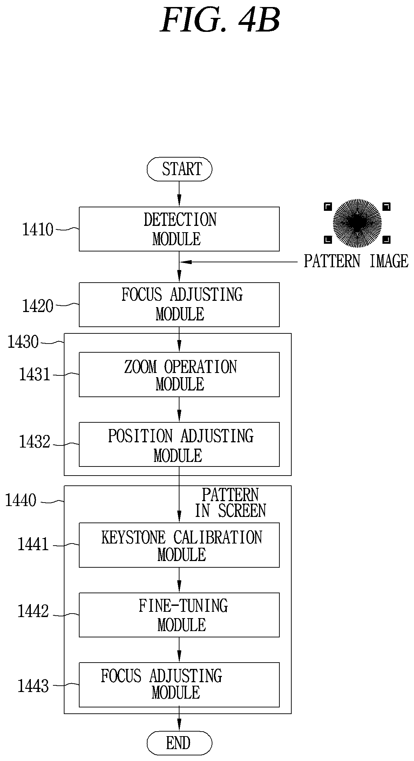

Referring to FIGS. 4A and 4B, an image projection device 1000 may be configured to include a ToF sensor 1100, a lamp assembly 1200, an operation unit 1300, and a processor 1400. The image projection device 1000 may further include a camera 1500.

The ToF sensor 1100 may be configured to measure a distance up to a target. The ToF sensor 1100 included in the image projection device 1000 of an image projection system may be configured to measure a distance to a screen or a marker associated with a pattern image. The lamp assembly 1200 may be configured to output an image signal including a pattern image which is a source image. The operation unit 1300 may control the lens assembly 1200 to move in one axial direction. The operation unit 1300 may control the operation of a mechanical structure including the lens assembly 1200, and thus may also be referred to as an operational controller. The processor 1400 may be configured to measure a distance to a screen by the ToF sensor 1100. The processor 1400 may control a pattern image output through the lamp assembly 1200 to be projected onto the screen. The camera 1500 may be configured to capture an image of the screen or a marker associated with the pattern image.

Referring to FIG. 4B, the processor 1400 may be configured to include a detection module 1410, a focus adjusting module 1420, a size/position adjusting module 1430, and a fine-adjusting module 1440. The size/position adjusting module 1430 may include a zoom operation module 1431 for adjusting the size of the pattern image through a zoom operation, and a position adjusting module 1432 for adjusting the position of the pattern image.

The fine-adjusting module 1440 may include a keystone calibration module 1441, a fine-tuning module 1442, and a focus adjusting module 1443. The keystone calibration module 1441 may perform keystone calibration on the pattern image in the screen. The keystone calibration module 1441 may project the pattern image in the screen by forcibly moving corners of the pattern image, to adjust the pattern image to be similar to a rectangular shape which is an original shape. The fine-tuning module 1442 may adjust the pattern image in the screen to be arranged at a central point on one axis. The fine-tuning module 1442 may perform a lens-shift operation to physically shift the position of the lens to project the pattern image onto the center of the screen. The fine-tuning module 1442 may perform an image shift operation to horizontally shift the position of the screen in one axial direction and/or another axial direction in a software manner. The focus adjusting module 1443 may adjust a focal position of the pattern image in the screen to adjust a screen aspect ratio of the pattern image in the screen in the one axial direction and/or another axial direction.

Referring to FIGS. 4A and 4B, the processor 1400 may control the operation unit 1400 to move the lamp assembly 1200 based on the measured distance to the screen and a focal position from the screen. The processor 1400 may calculate a sharpness value of the pattern image projected onto the screen through the lamp assembly 1200. The processor 1400 may adjust the size of the pattern image and the position where the pattern image is projected based on the calculated sharpness value.

The processor 1400 may be configured to detect the screen or the marker associated with the pattern image based on deep learning through the detection module 1410. The processor 1400 may detect coordinates of corner points of the screen or the marker associated with the pattern image and a reliability value associated with detection accuracy of the coordinates based on the deep learning. In case that the detection through the detection module 1410 fails, the processor 1400 may consider the failure as an exceptional case and perform an additional operation. For example, the processor 1400 may display a marker through a UI/UX module in a software manner and detect the displayed marker.

The processor 1400 may be configured to detect vertical and horizontal linear components based on the corner points through the detection module 1410. The processor 1400 may determine which of the corner points is an optimal corner point for detection of the screen or the marker. The processor 1400 may control the operation unit 1300 to move the lens assembly 1200 based on the distance from the center point of the ToF sensor to the optimal corner point.

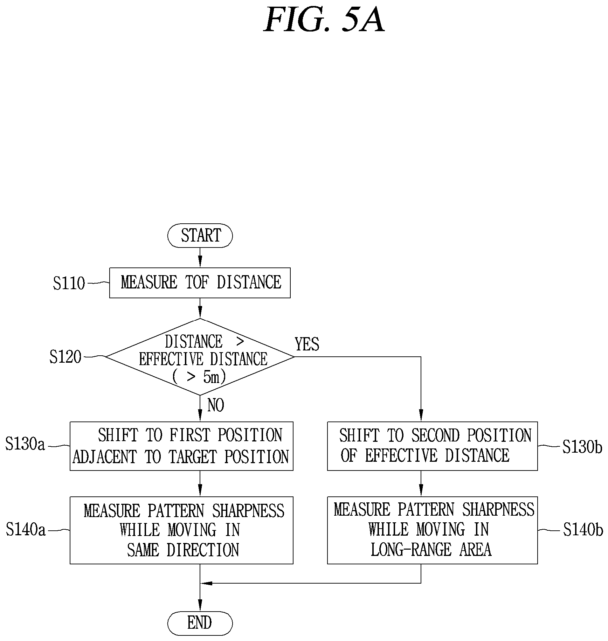

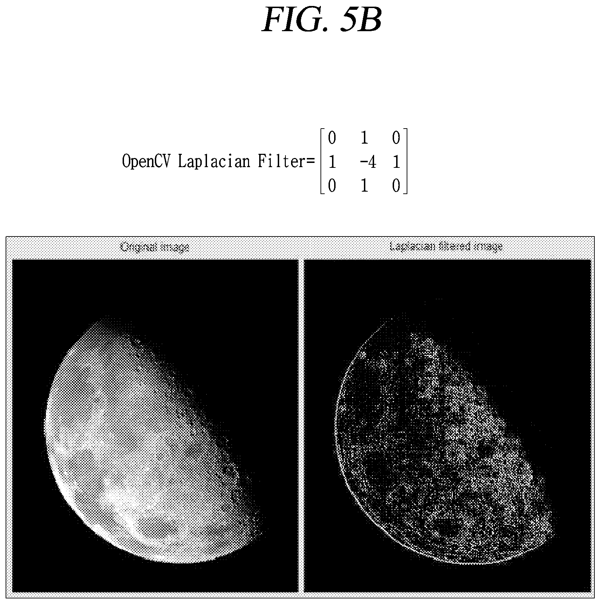

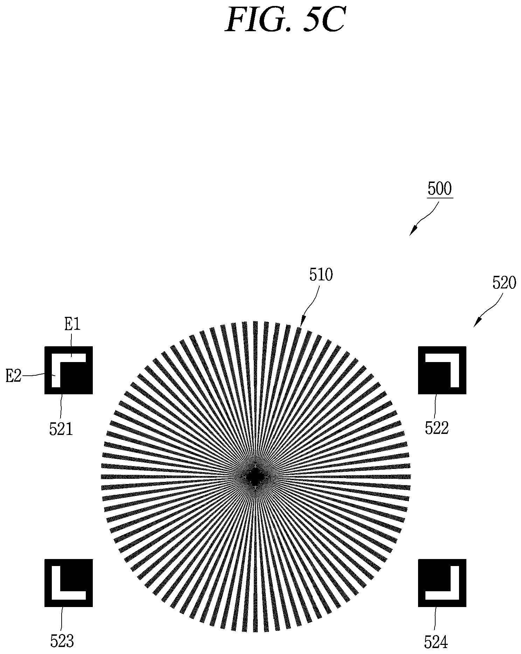

In some embodiments, an image projection device configured to project an image according to the specification may perform focus adjustment by measuring a sharpness value of a pattern image in different ways by comparing a distance measured by the ToF sensor 1100 with a reference distance. In this regard, FIG. 5A is a flowchart of a method of measuring sharpness based on a measurement distance according to the specification. FIG. 5B is a conceptual diagram of a method of measuring sharpness by filtering-based edge component detection according to an embodiment. FIG. 5C is a view of a pattern including edge components in several directions for sharpness component extraction according to the specification.

Referring to FIG. 5A, a sharpness measurement method may include a distance measurement process (S110), a distance comparison process (S120), a first movement process (S130a), a second movement process (S130b), a first pattern sharpness measurement process (S140a), and a second pattern sharpness measurement process (S140b). The processes of FIG. 5A may be performed by the processor 1400 of the image projection device 1000. In some embodiments, the processes of FIG. 5A may be performed by the focus adjusting module 1420 of the processor 1400.

Referring to FIGS. 4A to 5A, in the distance measurement process (S110), a distance from the center point of the ToF sensor 1100 to the screen or marker may be measured. In the distance comparison process (S120), it may be determined whether the measured distance to the screen or marker is less than a ToF effective distance. The first movement process (S130a) may be performed when the measured distance is shorter than the ToF effective distance in the distance comparison process (S120). For example, it may be determined whether the measured distance is shorter than an effective distance of 5 m. The second movement process (S130b) may be performed when the measured distance is equal to or longer than the effective distance in the distance comparison process (S120). For example, it may be determined whether the measured distance is longer than the effective distance of 5 m.

In case that the measured distance is shorter than the ToF effective distance, the image projection device or lamp assembly may be moved in a certain direction up to a first position, which is adjacent to a target position, in the first movement process (S130a). A user screen may also be displayed on the screen or a display region provided on the image projection device, so that the image projection device may be moved. In some embodiments, as the image projection device is moved, a distance between the lamp assembly included in the image projection device and the screen may change. Therefore, it may be considered that the position of the lamp assembly is also moved in response to the movement of the position of the image projection device.

In the first movement process (S130a), a current location may be moved to be spaced apart from a target position by a threshold value. For example, in case where a target position is 3 m and a current position is 1 m, the operation unit may be driven to shift the current position to about 2.5 m.

In the first pattern sharpness measurement process (S140a), a first sharpness value of the pattern image may be measured. The first sharpness value of the pattern image may be measured while moving the lamp assembly in a certain direction to a first position adjacent to the target position. Referring to FIG. 5B, sharpness measurement may be performed by detecting edge components using a specific filter. For example, a specific filter for sharpness measurement may be, but is not limited to, a 2D Laplacian filter of Formula 1 and may vary depending on the application.

[Formula 1]

$$\begin{bmatrix} 0 & 1 & 0 \\ 1 & -4 & 1 \\ 0 & 1 & 0 \end{bmatrix}$$

A filtered image of FIG. 5B may be obtained from an original image by applying a specific filter such as Formula 1. Pattern sharpness measurement may be performed by detecting a specific edge component in the filtered image of FIG. 5B. The specific edge component may be formed in a vertical direction, a horizontal direction, a diagonal direction, or any arbitrary direction. For a pattern image of a circular shape as illustrated in FIG. 5B, an edge component may be formed as a circular pattern within a specific angular range.

The first sharpness value of the pattern image may be measured while moving in the aforementioned vertical direction, and the horizontal direction, the diagonal direction, or any arbitrary direction in the first pattern sharpness measurement process (S140a). Referring to FIG. 5C, a composite pattern 500 including many edge components in the vertical/horizontal/diagonal directions may be used for sharpness component extraction. The composite pattern 500 may include a radial pattern 510 and a calibration pattern 520. The radial pattern 510 and the calibration pattern 520 may be referred to as a first pattern and a second pattern, respectively. The radial pattern 510 and/or the calibration pattern 520 may correspond to the marker associated with the pattern image, and a screen region may be detected based on the marker.

The radial pattern 510 may be a pattern for autofocus (AF) adjustment and may include a plurality of fan-shaped patterns. The fan-shaped patterns forming the radial pattern 510 may include first fan-shaped patterns of a first color and second fan-shaped patterns of a second color that are alternately arranged. The first fan-shaped pattern and the second fan-shaped pattern may also be formed as a first pattern and a second pattern different from each other. The calibration pattern 520 may be arranged adjacent to the radial pattern 510. The calibration pattern 520 may be a pattern for keystone calibration of a beam projector device. The calibration pattern 520 may include first to fourth calibration patterns 521 to 524 arranged at upper left, upper right, lower left, and lower right with respect to a center point of the radial pattern 510. Each of the first to fourth calibration patterns 521 to 524 may include a first edge component E1 in the horizontal direction and a second edge component E2 in the vertical direction.

Referring back to FIG. 5A, when the measured distance is equal to or longer than the ToF effective distance, the image projection device or lamp assembly may be moved to a second position corresponding to the ToF effective distance in the second movement process (S130b). A user screen may also be displayed on the screen or the display region provided on the image projection device, so that the image projection device may be moved. The ToF effective distance may be defined as a maximum measurable distance between a beam projector, which is the image projection device, and the screen. When the measured distance is longer than the ToF effective distance of 5 m, the image projection device or lamp assembly may be moved to the second position corresponding to the ToF effective distance in the second movement process (S130b).

The ToF effective distance, which is the maximum measurable distance, may increase when the image projection device is arranged in an outdoor area, compared to when the image projection device is arranged in an indoor area. For example, the ToF effective range may be set to about 4 m in the indoor area. In another example, the ToF effective distance may be set to about 5 m or more in the outdoor area.

In the second pattern sharpness measurement process (S140b), a second sharpness value of the pattern image may be measured. The second sharpness value of the pattern image may be measured while moving the image projection device or lamp assembly to the second position corresponding to the ToF effective distance. When the image projection device is arranged in the indoor area and the ToF effective distance increases, the second sharpness value of the pattern image may be measured while moving in a long-range area in the second pattern sharpness measurement process (S140b). Therefore, the pattern sharpness measurement and focus adjustment based on the ToF distance measurement may be enabled not only in the short-range indoor area but also in the long-range outdoor area of at least 4 m.

Referring to FIGS. 4A to 5C, the processor 1400 may measure a sharpness value based on the ToF distance measurement. The processor 1400 may adjust the size of the pattern image and the position where the pattern image is projected based on the measured sharpness value. In this regard, the processor 1400 may measure a distance to the screen from the center point of the ToF sensor 1100. In case where the measured distance is shorter than the ToF effective distance, the processor 1400 may measure a first sharpness value of the pattern image while moving the lamp assembly 1200 in a certain direction to a first position adjacent to a target position. In case where the measured distance is longer than or equal to the ToF effective distance, the processor 1400 may measure a second sharpness value of the pattern image while moving the lamp assembly 1200 to a second position corresponding to the ToF effective distance. The processor 1400 may adjust the size of the pattern image and the position where the pattern image is projected based on the measured first sharpness value and second sharpness value.

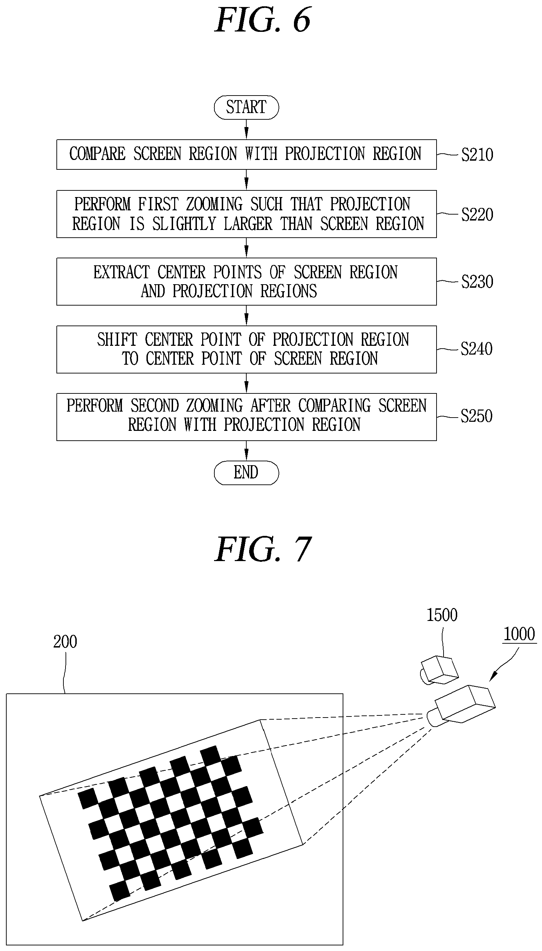

In some embodiments, an image projection device configured to project an image according to the specification may be configured to adjust the size and position of a pattern image. In this regard, FIG. 6 is a flowchart of a method of adjusting size and position of a pattern image, performed in an image projection device according to the specification.

Referring to FIGS. 4A, 4B, and 6, the processes of FIG. 6 may be performed by the processor 1400 of the image projection device 1000. In some embodiments, the processes of FIG. 6 may be performed by the size/position adjusting module 1430 of the processor 1400.

Referring to FIG. 6, a method of adjusting the size and position of a pattern image may be configured to include a region comparison process (S210), a first zooming process (S220), a center point extraction process (S230), a center point movement process (S240), and a second zooming process (S250).

In the region comparison process (S210), a first region, which is a display region of the screen, and a second region, which is a projection region where the pattern image is projected, may be compared. In the first zooming process (S220), a first zooming operation may be performed so that a focal position from the screen shifts to a first position. In the first zooming process (S220), the second region, which is the projection region, may be controlled to be larger than the first region, which is the display region of the screen, by at least a certain ratio.

In the center point extraction process (S230), a first center point of the first region, which is the display region of the screen, and a second center point of the second region, which is the projection region, may be extracted. In the center point movement process (S240), a center position of the pattern image may be adjusted so that the second center point of the second region, which is the projection region, shifts to the first center point of the first region, which is the display region of the screen. In the second zooming process (S250), a second zooming operation may be performed so that the focal position shifts to the second position in the state where the center position has been adjusted.

The method of adjusting the size and position of the pattern image described above may be performed by the processor 1400. In this regard, the processor 1400 may compare the first region, which is the display region of the screen, with the second region, which is the projection region on which the pattern image is projected. Based on a result of the comparison, the processor 1400 may perform the first zooming operation to shift the focal position to the first position, thereby controlling the second region to be larger than the first region by at least a certain ratio.

The processor 1400 may extract the first center point of the first region and the second center point of the second region. The processor 1400 may adjust the center position of the pattern image so that the second center point of the second region shifts to the first center point of the first region. The processor 1400 may perform the second zooming operation so that the focal position shifts to the second position in the state where the center position has been adjusted.

The processor 1400 may fine-tune the pattern image through the second zooming operation. In this regard, the processor 1400 may measure the first sharpness value or the second sharpness value through the first zooming operation by a first interval in one axial direction. The processor 1400 may measure the first sharpness value or the second sharpness value through the second zooming operation by a second interval narrower than the first interval in the one axial direction. The processor 1400 may perform fine-tuning such that the focal position shifts to the second position through the second zooming operation by the second interval narrower than the first interval in the state where the center position has been adjusted.

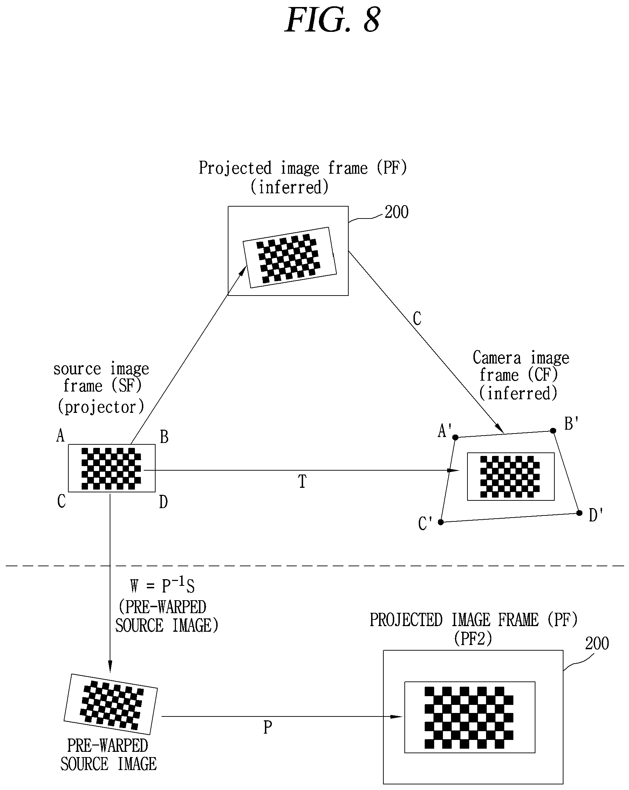

In some embodiments, an image projection device configured to project an image according to the specification may perform calibration through image-to-image transformation. In this regard, FIG. 7 is a conceptual diagram illustrating that a pattern image formed through an image projection device according to the specification is displayed as a projected image projected on a screen. FIG. 8 is a view of a transformation relationship between a source image frame and a projected image frame in relation to an image projection device according to the specification.

Referring to FIGS. 4A, 4B, 7, and 8, it may be necessary to determine a mapping matrix P representing the relationship between the image projection device 1000 which is the beam projector and the screen 200. It may also be necessary to determine a pre-warping matrix W that rectifies a projected image to a certain shape on the screen. The certain target shape of the projected image on the screen may be, but is not limited to, a rectangular shape.

Accordingly, the processor 1400 may determine a mapping matrix P that defines the transformation relationship between a source image frame SF of the pattern image and a projected image frame PF projected on the screen 200. In this regard, the screen 200 may appear in its original shape, but the projected image may appear distorted from the user's perspective.

The processor 1400 may determine a pre-warping matrix W that causes the projected image frame PF to be rectified to a certain shape on the screen 200. The processor 1400 may transform the source image frame SF based on the pre-warping matrix W. The processor 1400 may control the transformed source image frame to be projected as the projected image PF of the certain shape onto the screen 200. The pre-warping matrix W may be expressed as $P^{-1}S$. Here, P denotes a mapping matrix that defines the transformation relationship between the source image frame SF and the projected image frame PF, and S denotes a matrix that defines the transformation relationship including positional shifting and image scaling between specific points of the images, in relation to the pre-warping.

The processor 1400 may control the camera 1500 to capture an image of the screen 200 or a marker associated with the pattern image. The processor 1400 may detect the screen 200 and detect four corner points. The processor 1400 may determine a first mapping matrix T that defines the transformation relationship between the source image frame SF and a camera image frame CF based on the detected four corner points. In this regard, from the perspective of the camera 1500, the projected image frame PF may be seen in its original shape before distortion occurs. In another example, the four detected corner points of the screen 200 may form a shape other than a certain shape, causing the screen 200 to appear distorted.

The processor 1400 may determine a second mapping matrix C, which causes the projected image frame PF projected on the screen 200, detected from the perspective of the camera 1500, to have a certain shape, based on the four detected corner points. In this regard, the source video frame SF may have a rectangular shape including four corner points A, B, C, and D. The source image frame SF may be transformed into the camera image frame CF by the first mapping matrix T, which is a mapping parameter. Four corner points A', B', C', and D' may be detected on the camera image frame CF. Accordingly, a calibration slide pattern, which is the pattern image, may be detected on the camera image frame CF.

The processor 1400 may determine a mapping matrix P as $C^{-1}T$ based on the first mapping matrix T and the second mapping matrix C. The processor 1400 may determine optimal points for adjusting the offset and scale of a rectified screen into a certain shape. The processor 1400 may determine whether the offset and scale degrees of the rectified screen are appropriate based on coordinates of optimal points and coordinates of the corresponding points of an image before being rectified to the certain shape.

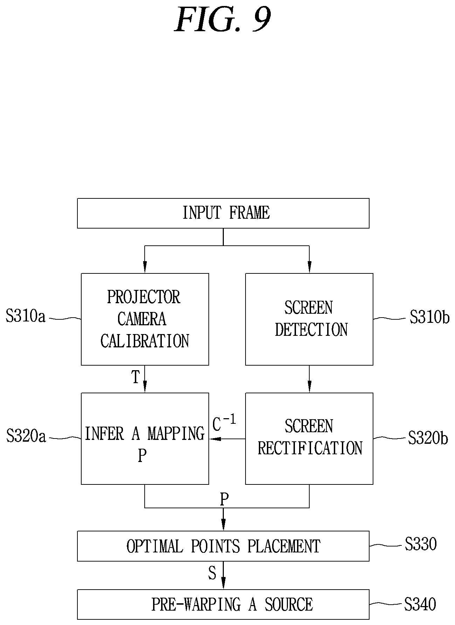

A keystone calibration method for an image projection device according to the specification may be performed through screen/marker detection and transformation between image frames during calibration. In this regard, FIG. 9 is a flowchart of a keystone calibration method for an image projection device according to the specification. Referring to FIG. 9, a keystone calibration method may include a projector-camera calibration process (S310a), a screen detection process (S310b), a mapping matrix inference process (S320a), and a screen region rectification process (S320b). In this regard, the projector-camera calibration process (S310a) and the screen detection process (S310b) may be performed simultaneously or one process may be started before the other process is completed. The mapping matrix inference process (S320a) and the screen region rectification process (S320b) may be performed simultaneously, or one process may be started before the other process is completed. The keystone calibration method may further include an optimal point placement process (S330) and a pre-warping process (S340).

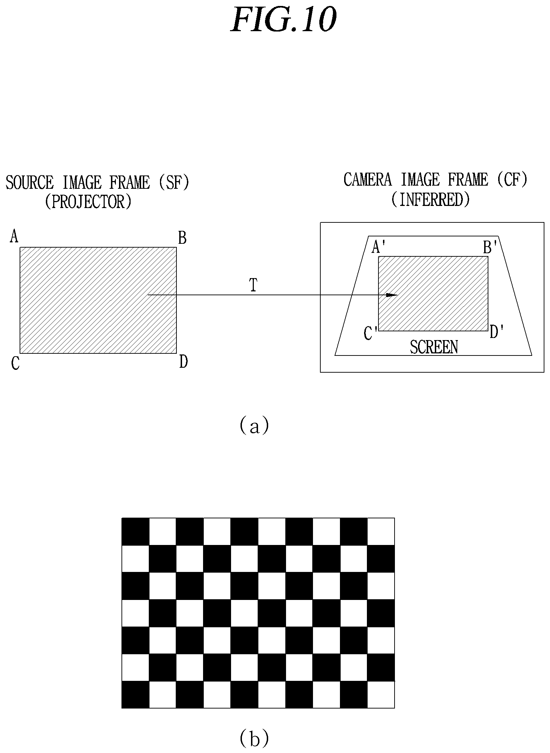

In some embodiments, FIG. 10 is a view of a structure of determining a mapping parameter in relation to projector-camera calibration according to the specification and an example of a pattern image related to the structure. (a) of FIG. 10 illustrates the transformation between the source image frame SF and the camera image frame CF based on a mapping parameter in relation to projector-camera calibration according to the specification. (b) of FIG. 10 illustrates an example of a calibration slide pattern, which is a pattern image generated and projected by the image projection device according to the specification.

Referring to FIGS. 8 to 10, the source image frame SF may have a rectangular shape including four corner points A, B, C, and D. For example, coordinates of the corner points A, B, C, and D of the source image frame SF may be (0,0), (0, 720), (1280,0), and (1280,720), respectively. The source image frame SF may be transformed into the camera image frame CF by the first mapping matrix T, which is a mapping parameter. Four corner points A', B', C', and D' may be detected on the camera image frame CF. Accordingly, a calibration slide pattern, which is a pattern image of (b) of FIG. 10, may be detected on the camera image frame CF.

The first mapping matrix T which is a homography matrix may be calculated based on at least four corresponding points (e.g., corner points) between the calibration slide patterns on the source image frame SF and the camera image frame CF.

Referring to FIGS. 4A, 4B, and 7 to 10, the first mapping matrix T between the projector, which is the image projection device, and the camera image frame CF may be derived in the projector-camera calibration process (S310a). After a region where the screen 200 is arranged is detected in the screen detection process (S310b), four corner points may be derived. In this regard, calibration may be performed by projecting a pattern image, such as a chess pattern, from the projector.

In the screen region rectification process (S320b), a second mapping matrix C may be determined so that the projected image frame PF projected on the screen 200, detected from the perspective of the camera 1500, has a certain shape. In the screen region rectification process (S320b), a relational expression may be derived for transforming the screen region, which is observed from the perspective of the camera, into a certain shape, for example, a square shape. Projective and affine distortion may be removed from the projected image frame through the screen region rectification process (S320b).

In the mapping matrix inference process (S320a), a mapping matrix P representing the relationship between the projector and the screen image may be derived. In some embodiments, the mapping matrix P that defines the transformation relationship between the source image frame SF of the pattern image and the projected image frame PF projected on the screen may be derived. The mapping matrix P may be determined as $C^{-1}T$. Therefore, the mapping matrix inference process (S320a) may utilize the first mapping matrix T derived in the projector-camera calibration process (S310a) and the second mapping matrix C derived in the screen region rectification process (S320b).

In the optimal point placement process (S330), optimal points may be determined in the rectified screen region. In this regard, the offset and scale of an image may be adjusted. In the pre-warping process (S340), an image frame, which is transformed by multiplying the source image frame SF by the pre-warping matrix W, may be projected onto the screen through the projector.

In some embodiments, the image projection device configured to project an image according to the specification may infer the projected image frame PF to be projected, without pre-warping, using the camera image frame CF. In this regard, the processor 1400 may infer the projected image frame PF before an image (rectified screen) rectified to a certain shape. This may be done by applying $C^{-1}$, which is an inverse transformation of the second mapping matrix C, to the camera image frame CF. Accordingly, the projected image frame may be obtained indirectly. The processor 1400 may control the image frame, which is transformed by multiplying the source image frame SF by the pre-warping matrix W, to be projected onto the screen as a projected image frame PF2 of a certain shape.

In some embodiments, in relation to the keystone calibration of the image projection device according to the specification, the calibration performance may be evaluated by detecting the corner points of the projected image frame. In this regard, the processor 1400 may detect the corner points of the projected image frame PF2 and perform an evaluation associated with the degree to which the projected image frame PF2 has been rectified to a certain shape.

The processor 1400 may rectify the mapping matrix P to P1 based on a distance difference between the coordinates of the detected corner points and the coordinates of optimal corner points for rectification to the certain shape. The processor 1400 may rectify the pre-warping matrix W to W1 based on the rectified mapping matrix P1. The processor 1400 may transform the source image frame SF based on the rectified pre-warping matrix W1 and control the transformed source image frame to be projected in the certain shape onto the screen 200. Accordingly, the processor 1400 may perform calibration more accurately and at a fast speed by reflecting previous calibration results upon the keystone calibration of the image projection device according to the specification.

Referring to FIG. 4A, the image projection device 1000 may further include a user input unit 1600. In some embodiments, the image projection device configured to project an image according to the specification may automatically perform calibration according to a user input applied through the user input unit 1600.

Referring to FIGS. 4A, 4B, and 7 to 10, the user input unit 1600 may be configured to receive a user input so that calibration of a pattern image projected on the screen 200 is performed. Automatic calibration for a pattern image may be performed based on a user input applied through the user input unit 1600, so it may be referred to as one-click calibration.

The processor 1400 may control the projected image frame PF2 projected on the screen to be displayed in the certain shape based on the user input applied through the user input unit 1600. The processor 1400 may control, based on the user input, the projected image frame PF2 projected on the screen 200 to be displayed in the certain shape and within a certain distance from a center position on one axis of the screen 200.

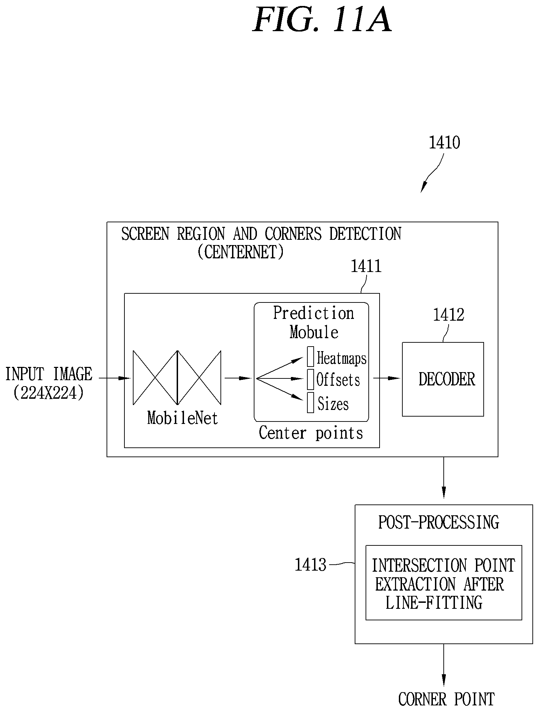

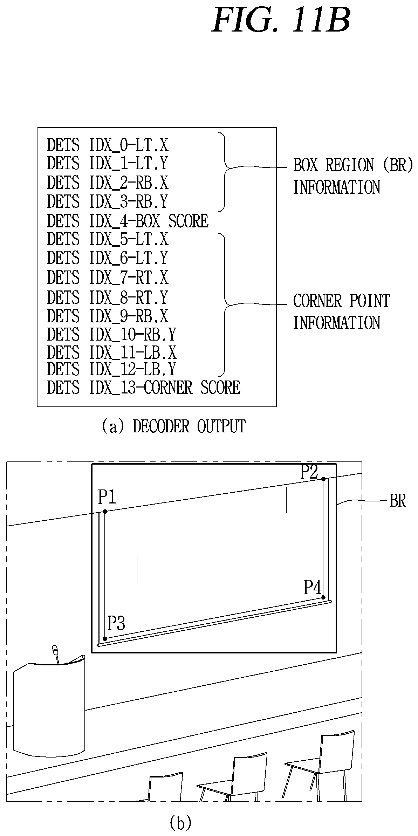

In an image projection device configured to project an image according to the specification, a screen region detection may be performed, as described above, through a preprocessing process based on deep learning or artificial intelligence (AI) and a subsequent postprocessing process based on intersection point extraction. In this regard, FIG. 11A is a view of a configuration for performing a screen region detection algorithm in an image projection device according to the specification. In another example, FIG. 11B is a view of information associated with a decoder output of FIG. 11A and a screen detection result.

Referring to FIG. 11A, an input image may be input to a detection module 1410 that performs screen region/corner detection. The detection module 1410 may include a deep learning module 1411 for screen region /corner detection and a decoder 1412 for outputting information related to the screen region. The detection module 1410 may further include a post-processing module 1413 configured to extract intersection points and detect corner points of the screen region.

The input image input to the deep learning module 1411 may be a rectangular or square image. The detection module 1410 may detect the screen region and the corner points of the screen using an object detection network. CenterNet may be used as the object detection network, but is not limited thereto, and may vary depending on the application. Two deep learning models may also be used to detect the screen region and the corner points, respectively. Optimal corner points may be determined by detecting linear components in a vertical/-horizontal direction based on the corner points detected through the deep learning module 1411.

Map information, offset information, and size information of the screen region may be predicted through the deep learning module 1411. The screen region and the corner points of the screen may be output through the decoder 1412. The optimal corner points of the screen region where the screen 200 is arranged may be determined by extracting intersection points using a line fitting method through the post-processing module 1413. To this end, the optimal corner points may be determined by detecting the vertical/horizontal linear components associated with the screen region.

(a) of FIG. 11B illustrates box region information about the screen and corner point information about the screen, which are output from the decoder 1412 of FIG. 11A. (b) of FIG. 11B illustrates coordinates information P1 to P4 regarding the detected box region BR and corner points of the screen captured by the camera of the image projection device.

Referring to FIGS. 11A and 11B, coordinate information LT.x, LT.y, RB.x, and RB.y and reliability information relating to the box region BR representing the screen region may be derived through the decoder 1412. Here, LT.x, LT.y, RB.x, and RB.y may denote x and y coordinates of upper left and lower right of the box region, and box score may denote a reliability value of the coordinate information about the box region. The coordinate information P1 to P4 and reliability information related to the corner points of the screen may be derived through the post-processing module 1413. The coordinate information P1 to P4 may be expressed as LT.x, LT.y, RT.x, RT.y, RB.x, RB.y, LB.x, and LB.y. Here, LT.x, LT.y, RT.x, RT.y, RB.x, RB.y, LB.x, and LB.y may denote the x and y coordinates of the upper left, upper right, lower left, and lower right corner points, and box score may denote the reliability value of the coordinate information related to the box region.

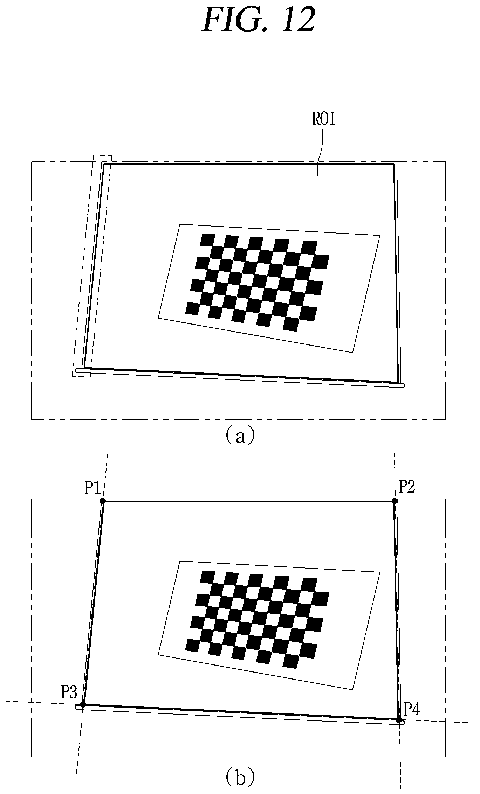

In some embodiments, the image projection device configured to project an image according to the specification may perform a post-processing process based on a screen region or a post-processing process based on a marker in case that a screen is not present. In this regard, FIG. 12 is a view of a configuration for detecting a screen region through a pattern image displayed on a screen according to the specification.

Referring to FIGS. 11A to 12, a post-processing process may be performed to reduce errors in corner points detected based on deep learning. Referring to (a) of FIG. 12, a region of Interest (ROI) may be created using the coordinate values of the corner points of the screen region. The ROI of (a) of FIG. 12 may correspond to the box region BR indicating the screen region of FIG. 12B. In (a) of FIG. 12, edge components inside the ROI may be detected and intersection points may be extracted by performing line-fitting as in (b) of FIG. 12. The intersection points of (b) of FIG. 12 may correspond to the corner points P1 to P4 of the screen of FIG. 11B. A transformation matrix may be calculated using the extracted intersection points.

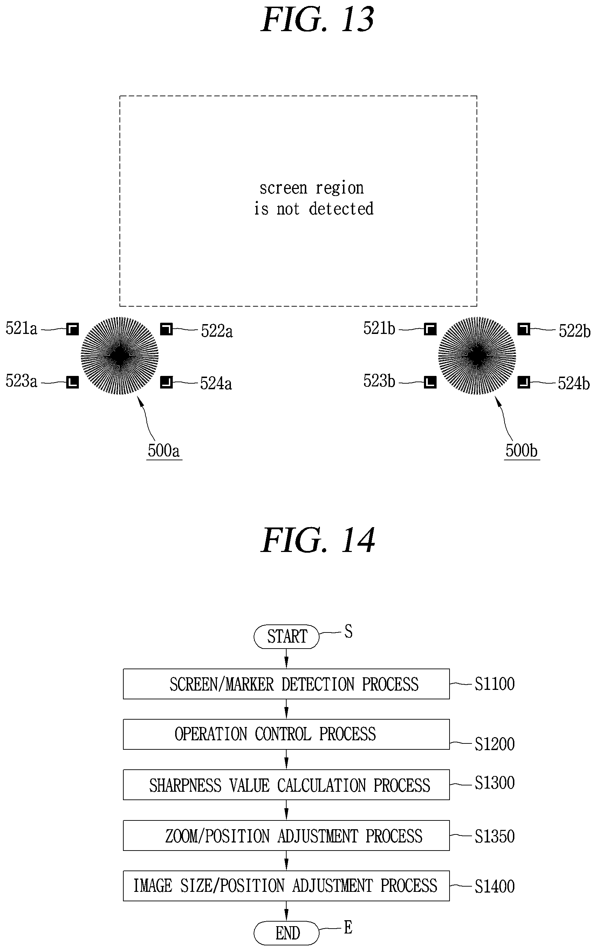

Markers, which are generated in a software manner, may be projected on a wall surface in case that a projected image is displayed on the wall surface without a real screen or a screen region is not detected. In this regard, FIG. 13 is a view of a configuration for detecting markers in an image projection device that does not use a screen according to the specification.

Referring to FIGS. 5C and 13, a plurality of markers may be arranged by being projected as pattern images on a wall without a screen. Therefore, a transformation matrix estimation method using markers may be applied in an environment without a screen. A first marker 500a and a second marker 500b may be arranged in a left region and a right region. For example, the positions where the first marker 500a and the second marker 500b are displayed may correspond to positions of the left region and the right region of the screen region.

After detecting the first marker 500a and the second marker 500b in the left and right regions, an orthogonalization process may be performed so that first to fourth calibration patterns 521a to 524a of the detected first marker 500a form a square shape. Likewise, an orthogonalization process may be performed so that first to fourth calibration patterns 521b to 521b of the detected second marker 500b form a square shape. It may be possible to verify whether screen calibration, such as the orthogonalization process, has been performed normally by determining whether undetected or unselected markers are square in shape. A transformation matrix may be selected by checking whether the calibration patterns 521a to 524 and 521b to 521b are displayed in the square shape through the orthogonalization process.

Hereinafter, the operation of the processor will be described in detail with reference to FIGS. 4A to 13 in relation to the aforementioned screen region and/or marker detection. In this regard, in case that the processor 1400 fails to detect the screen 200 based on deep learning, the processor 1400 may generate a marker associated with a pattern image and control the marker to be projected through the lamp assembly 1200. The processor 1400 may detect the coordinates of corner points of a screen region or marker projected through the camera 1500 and a reliability value of the coordinates.

The processor 1400 may determine whether lines of the upper, lower, one end, and another end of the screen 200 are obtainable from the point of view of the camera. The processor 1400 may determine whether the surface of the screen is expressed with a uniform color in a certain range. The processor 1400 may determine whether a first region, which is the display region of the screen, is not obscured by a person or other object. The processor 1400 may detect coordinates of the corner points of the screen 200 and a reliability value based on deep learning in case that it is determined that lines of the screen are obtainable, the surface is expressed with a uniform color, and there is no obscured portion in the first region.

The foregoing description has been given of the image projection device configured to project an image according to one aspect of the specification. Hereinafter, an image projection control method for controlling the output of a pattern image according to another aspect of the specification will be described. In this regard, the operations and technical features described in the image projection device may also be applied to the following image projection control method.

In this regard, FIG. 14 is a flowchart of an image projection control method of controlling an output of a pattern image according to the specification. Referring to FIGS. 4A and 14, the image projection control method may be performed by the processor of the image projection device, such as the projector.

The image projection control method may include a screen/marker detection process (S1100), an operation control process (S1200), a sharpness value calculation process (S1300), and an image size/position adjustment process (S1400).

In the screen/marker detection process (S1100), a screen or a marker associated with a pattern image may be detected. In the operation control process (S1200), the operation unit may be controlled to move the lamp assembly based on a measured distance to the screen and a focal position from the screen through a ToF sensor. In the sharpness value calculation process (S1300), a sharpness value of the pattern image projected onto the screen through the lamp assembly may be calculated. Based on the sharpness value calculated in the image size/position adjustment process (S1400), a size of the pattern image and a position on which the pattern image is projected may be adjusted.

In the screen/marker detection process (S1100), the processor may detect, based on deep learning, coordinates of corner points of the screen or the marker associated with the pattern image and a reliability value associated with detection accuracy of the coordinates. In the screen/marker detection process (S1100), the processor may determine vertical and horizontal linear components based on the corner points, and may determine which of the corner points is the optimal corner point for detecting the screen or marker.

After the sharpness value calculation process (S1300) is performed, the image projection control method may further include a zoom/position adjustment process (S1350). In the zoom/position adjustment process (S1350), the position may be adjusted by comparing a first region, which is a display region of the screen, and a second region, which is a projection region where the pattern image is projected. In the zoom/position adjustment process (S1350), the processor may perform a first zooming operation to move a focal position to a first position, thereby controlling the second region to be larger than the first region by at least a certain ratio.

In the zoom/position adjustment process (S1350), the processor may extract a first center point of the first region and a second center point of the second region. In the zoom/position adjustment process (S1350), the processor may adjust a center position of the pattern image so that the second center point of the second region moves to the first center point of the first region. In the zoom/position adjustment process (S1350), the processor may perform a second zooming operation so that the focal position moves to a second position in the state where the center position has been adjusted.

So far, the image projection device and the image projection control method have been described. The technical effects of the image projection device and the image projection control method according to specification will be summarized as follows, but are not limited thereto.

According to an embodiment, an image projection control method may be provided based on sharpness of a pattern image measured by controlling an operation of a lens assembly according to a measured distance to a screen.

According to an embodiment, an automatic calibration method for an image projection device may be provided by adjusting a size and projected position of a pattern image based on a calculated sharpness value.

According to an embodiment, focus, screen placement/size, and sharpness may be automatically adjusted each time an image projection device, which may be movably installed, is installed at a specific location.

According to an embodiment, an image projection device may be controlled so that focus, screen placement/size, and sharpness are automatically adjusted each time the image projection device is installed or powered on.

Further scope of applicability of the disclosure will become apparent from the following detailed description. It should be understood, however, that the detailed description and specific examples, such as the preferred embodiments, are given by way of illustration only, because various changes and modifications within the technical idea and scope of the disclosure will be apparent to those skilled in the art.

Further scope of applicability of the image projection device and the image projection control method according to the specification will become apparent from the detailed description below. It should be understood, however, that the detailed description and specific examples, such as the preferred embodiments, are given by way of illustration only, because various changes and modifications within the technical idea and scope of the disclosure will be apparent to those skilled in the art.

In relation to the aforementioned disclosure, the image projection device and the image projection control method may be implemented as computer-readable codes in a program-recorded medium. The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. Also, the computer-readable medium may also be implemented as a format of carrier wave (e.g., transmission via an Internet). The computer may include the controller of the terminal. Therefore, it should also be understood that the above-described embodiments are not limited by any of the details of the foregoing description, unless otherwise specified, but rather should be construed broadly within its scope as defined in the appended claims, Therefore, all changes and modifications that fall within the metes and bounds of the claims, or equivalents of such metes and bounds are therefore intended to be embraced by the appended claims.

**Claims**

1. An image projection device comprising:

    a time-of-flight (ToF) sensor configured to measure a distance to a target;
    a lamp assembly configured to output an image signal comprising a pattern image;
    an operation unit configured to control the lens assembly to move in one axial direction; and
    a processor configured to control the ToF sensor to measure a distance to a screen and the lamp assembly to project the output pattern image onto the screen,
    wherein the processor is configured to
    control the operation unit to move the lamp assembly based on the measured distance and a focal position from the screen,
    calculate a sharpness value of the pattern image projected on the screen through the lamp assembly, and

    adjust a size of the pattern image and a position on which the pattern image is projected based on the calculated sharpness value.

2. The image projection device of claim 1, further comprising a camera configured to capture an image of the screen or a marker associated with the pattern image,

    wherein the processor is configured to
    detect, based on deep learning, coordinates of corner points of the screen or the marker associated with the pattern image and a reliability value associated with detection accuracy of the coordinates,
    detect vertical and horizontal linear components based on the corner points, to determine which of the corner points is an optimal corner point for detecting the screen or the marker, and
    control the operation unit to move the lens assembly based on a distance from a center point of the ToF sensor to the optimal corner point.

3. The image projection device of claim 2, wherein the processor is configured to

    control the marker associated with the pattern image to be generated and projected through the lamp assembly in case that the detection of the screen based on the deep learning fails, and
    detect the coordinates of the corner points of the projected marker and the reliability value through the camera.

4. The image projection device of claim 2, wherein the processor is configured to

    determine whether lines of upper, lower, one end, and another end of the screen are obtainable from a point of view of the camera,
    determine whether a surface of the screen is expressed with a uniform color within a certain range,
    determine whether there is a portion obscured by a person or other object in a first region, which is a display region of the screen, and
    detect the coordinates of the corner points of the screen and the reliability value based on the deep learning in case that it is determined that the lines of the screen are obtainable, the surface is expressed with the uniform color, and there is no obscured portion in the first region.

5. The image projection device of claim 1, wherein the processor is configured to

    measure the distance to the screen based on a center point of the ToF sensor,

measure a first sharpness value of the pattern image while moving the lamp assembly in a certain direction to a first position adjacent to a target position in case that the measured distance is shorter than a ToF effective distance, measure a second sharpness value of the pattern image while moving the lamp assembly to a second position corresponding to the ToF effective distance in case that the measured distance is equal to or longer than the ToF effective distance, and
adjust the size of the pattern image and the position on which the pattern image is projected based on the measured first sharpness value and second sharpness value.

6. The image projection device of claim 5, wherein the processor is configured to

compare a first region, which is a display region of the screen, and a second region, which is a projection region where the pattern image is projected,
perform a first zooming operation to move the focal position to the first position, to control the second region to be larger than the first region by at least a certain ratio,
extract a first center point of the first region and a second center point of the second region,
adjust a center position of the pattern image so that the second center point of the second region moves to the first center point of the first region, and
perform a second zooming operation so that the focal position moves to the second position in a state that the center position has been adjusted.

7. The image projection device of claim 6, wherein the processor is configured to

measure the first sharpness value or the second sharpness value through the first zooming operation by a first interval in one axial direction, and
measure the first sharpness value or the second sharpness value by a second interval narrower than the first interval in the one axial direction through the second zooming operation, to finely adjust the focal position so that the focal position moves to the second position in the state that the center position has been adjusted.

8. The image projection device of claim 1, wherein the processor is configured to

determine a mapping matrix P which defines a transformation relationship between a source image frame of the pattern image and a projected image frame projected on the screen, determine a pre-warping matrix W which rectifies the projected image frame to a certain shape on the screen, and
transform the source image frame based on the pre-warping matrix W, such that the transformed source image frame is projected in the certain shape onto the screen.

9. The image projection device of claim 8, further comprising a camera configured to capture an image of the screen or a marker associated with the pattern image,

wherein the processor is configured to
detect the screen to detect four corner points, and
determine a first mapping matrix T which defines a transformation relationship between the source image frame and a camera image frame based on the four detected corner points.

10. The image projection device of claim 9, wherein the processor is configured to determine a second mapping matrix C which rectifies the projected image frame projected on the detected screen to the certain shape, from a point of view of the camera, based on the four detected corner points.

11. The image projection device of claim 10, wherein the processor is configured to

determine a mapping matrix P as $C^{-1}T$ based on the first mapping matrix T and the second mapping matrix C,
determine optimal points for adjusting offset and scale of the image (rectified screen) rectified to the certain shape, and
determine whether the offset and scale of the rectified image are appropriate based on coordinates of optimal points and coordinates of corresponding points of an image before being rectified to the certain shape.

12. The image projection device of claim 10, wherein the processor estimates the projected image frame before the image rectified to the certain shape, by applying $C^{-1}$, which is an inverse transformation of the second mapping matrix C, to the camera image frame.

13. The image projection device of claim 10, wherein the processor controls an image frame transformed by multiplying the source image frame by the pre-warping matrix W to be projected as the projected image frame of the certain shape on the screen.

14. The image projection device of claim 13, wherein the processor is configured to

perform an evaluation associated with a degree to which the projected image frame has been rectified to the certain shape by detecting corner points of the projected image frame, and rectify the mapping matrix P to P1 based on a distance difference between the coordinates of the detected corner points and coordinates of optimal corner points for the rectification to the certain shape, rectify the pre-warping matrix to W1 based on the rectified mapping matrix P1, and transform the source image frame based on the pre-warping matrix W1, such that the transformed source image frame is projected in the certain shape onto the screen.

15. The image projection device of claim 8, further comprising a user input unit configured to receive a user input so that calibration of the pattern image projected on the screen is performed, wherein the processor is configured to control, based on the user input, a center position of the projected image frame to be in a certain distance from a center position of the screen on one axis of the screen while the projected image frame projected on the screen is displayed in the certain shape.

16. An image projection control method for controlling a pattern image to be output, performed by a processor of a projector, the method comprising:

a screen/marker detection process of detecting a screen or a marker associated with the pattern image; an operation control process of controlling an operation unit to move a lamp assembly based on a distance to the screen measured through a time of flight (ToF) sensor and a focal position from the screen; a sharpness value calculation process of calculating a sharpness value of the pattern image projected onto the screen through the lamp assembly; and a pattern image size/position adjustment process of adjusting a size of the pattern image and a position on which the pattern image is projected based on the calculated sharpness value.

17. The image projection control method of claim 15, wherein the screen/marker detection process is to

detect, based on deep learning, coordinates of corner points of the screen or the marker associated with the pattern image and a reliability value associated with detection accuracy of the coordinates, and

detect vertical and horizontal linear components based on the corner points, to determine which of the corner points is an optimal corner point for detecting the screen or the marker.

18. The image projection control method of claim 16, further comprising a zoom/position adjustment process of adjusting a position by comparing a first region, which is a display region of the screen, with a second region, which is a projection region in which the pattern image is projected, after the sharpness value calculation process is performed,

wherein the zoom/position adjustment process is to perform a first zooming operation to move the focal position to a first position, to control the second region to be larger than the first region by at least a certain ratio, extract a first center point of the first region and a second center point of the second region, adjust a center position of the pattern image so that the second center point of the second region moves to the first center point of the first region, and perform a second zooming operation so that the focal position moves to a second position in a state that the center position has been adjusted.

19. The image projection control method of claim 16, wherein the pattern image size/position adjustment process is to

determine a mapping matrix P which defines a transformation relationship between a source image frame of the pattern image and a projected image frame projected on the screen, determine a pre-warping matrix W which rectifies the projected image frame to a certain shape on the screen, and transform the source image frame based on the pre-warping matrix W, such that the transformed source image frame is projected in the certain shape onto the screen.

20. The image projection control method of claim 19, wherein the pattern image size/position adjustment process is to

control an image frame transformed by multiplying the source image frame by the pre-warping matrix W to be projected as a projected image frame of the certain shape on the screen. perform an evaluation associated with a degree to which the projected image frame has been rectified to the certain shape by detecting corner points of the projected image frame.

# FIG. 1

100

90

POWER SUPPLY
UNIT

10 — WIRELESS
COMMUNICATION
UNIT

PROJECTION
UNIT — 50

80 — CONTROL
UNIT

40 — SENSING
UNIT

MEMORY — 70

60 — POSITION
ADJUSTMENT
DEVICE

61 — VERTICAL
MOVEMENT
PORTION

62 — HORIZONTAL
MOVEMENT
PORTION

# FIG. 2

# FIG. 3

*FIG. 4A*

1000

1100

TOF
SENSOR

1400

1200

RAMP
ASSEMBLY

PROCESSOR

1300

OPERATION
UNIT

CAMERA

USER INPUT
UNIT

1500

1600

# FIG. 4B

START

1410 — DETECTION MODULE

PATTERN IMAGE

1420 — FOCUS ADJUSTING MODULE

1430 —
1431 — ZOOM OPERATION MODULE

1432 — POSITION ADJUSTING MODULE

1440 —
PATTERN IN SCREEN

1441 — KEYSTONE CALIBRATION MODULE

1442 — FINE-TUNING MODULE

1443 — FOCUS ADJUSTING MODULE

END

# FIG. 5A

START

S110 — MEASURE TOF DISTANCE

S120 — DISTANCE >
EFFECTIVE DISTANCE
( > 5m)

YES

NO

S130a — SHIFT TO FIRST POSITION
ADJACENT TO TARGET POSITION

SHIFT TO SECOND POSITION
OF EFFECTIVE DISTANCE — S130b

S140a — MEASURE PATTERN SHARPNESS
WHILE MOVING IN
SAME DIRECTION

MEASURE PATTERN SHARPNESS
WHILE MOVING IN
LONG-RANGE AREA — S140b

END

# FIG. 5B

$$\text{OpenCV Laplacian Filter} = \begin{bmatrix} 0 & 1 & 0 \\ 1 & -4 & 1 \\ 0 & 1 & 0 \end{bmatrix}$$

# FIG. 5C

# FIG. 6

```
                    ( START )
                        │
                        ▼
┌───────────────────────────────────────────┐
│ COMPARE SCREEN REGION WITH PROJECTION REGION │──── S210
└───────────────────────────────────────────┘
                        │
                        ▼
┌───────────────────────────────────────────┐
│ PERFORM FIRST ZOOMING SUCH THAT PROJECTION  │──── S220
│ REGION IS SLIGHTLY LARGER THAN SCREEN REGION │
└───────────────────────────────────────────┘
                        │
                        ▼
┌───────────────────────────────────────────┐
│   EXTRACT CENTER POINTS OF SCREEN REGION    │──── S230
│         AND PROJECTION REGIONS              │
└───────────────────────────────────────────┘
                        │
                        ▼
┌───────────────────────────────────────────┐
│   SHIFT CENTER POINT OF PROJECTION REGION   │──── S240
│    TO CENTER POINT OF SCREEN REGION         │
└───────────────────────────────────────────┘
                        │
                        ▼
┌───────────────────────────────────────────┐
│ PERFORM SECOND ZOOMING AFTER COMPARING SCREEN │──── S250
│     REGION WITH PROJECTION REGION           │
└───────────────────────────────────────────┘
                        │
                        ▼
                    ( END )
```

# FIG. 7

# FIG. 8

Projected image frame (PF)
(inferred)

200

Camera image
frame (CF)
(inferred)

C

A'    B'

source image
frame (SF)
(projector)

A    B

C    D

T

C'    D'

$W = P^{-1}S$
(PRE-WARPED
SOURCE IMAGE)

PROJECTED IMAGE FRAME (PF)
(PF2)

200

PRE-WARPED
SOURCE IMAGE

P

# FIG. 9

```
                      ┌─────────────────────────┐
                      │       INPUT  FRAME       │
                      └─────────────────────────┘
                          │                 │
                          ▼                 ▼
              ┌───────────────────┐ ┌───────────────────┐
              │    PROJECTOR      │ │                   │
   S310a ─────│     CAMERA        │ │      SCREEN       │───── S310b
              │   CALIBRATION     │ │    DETECTION      │
              └───────────────────┘ └───────────────────┘
                        T │                 │
                          ▼                 ▼
              ┌───────────────────┐ ┌───────────────────┐
              │                   │ C⁻¹│                 │
   S320a ─────│  INFER A MAPPING ◄├────┤     SCREEN      │───── S320b
              │         P         │ │  RECTIFICATION    │
              └───────────────────┘ └───────────────────┘
                          │             │
                          └──────┬──────┘
                               P ▼
              ┌─────────────────────────────────────────┐
              │       OPTIMAL  POINTS  PLACEMENT         │───── S330
              └─────────────────────────────────────────┘
                               S ▼
              ┌─────────────────────────────────────────┐
              │        PRE-WARPING  A  SOURCE            │───── S340
              └─────────────────────────────────────────┘
```

# FIG.10

SOURCE IMAGE FRAME (SF)
(PROJECTOR)

CAMERA IMAGE FRAME (CF)
(INFERRED)

(a)

(b)

# FIG. 11A

1410

**SCREEN REGION AND CORNERS DETECTION (CENTERNET)**

1411

Prediction Mobule
- Heatmaps
- Offsets
- Sizes

Center points

MobileNet

INPUT IMAGE (224X224)

1412

DECODER

**POST-PROCESSING**

1413 — INTERSECTION POINT EXTRACTION AFTER LINE-FITTING

CORNER POINT

# FIG. 11B

```
DETS IDX_0-LT.X
DETS IDX_1-LT.Y
DETS IDX_2-RB.X          ── BOX REGION (BR)
DETS IDX_3-RB.Y             INFORMATION
DETS IDX_4-BOX SCORE
DETS IDX_5-LT.X
DETS IDX_6-LT.Y
DETS IDX_7-RT.X
DETS IDX_8-RT.Y          ── CORNER POINT
DETS IDX_9-RB.X             INFORMATION
DETS IDX_10-RB.Y
DETS IDX_11-LB.X
DETS IDX_12-LB.Y
DETS IDX_13-CORNER SCORE
```

(a) DECODER OUTPUT

(b)

# FIG. 12

(a)

(b)

# FIG. 13

screen region
is not detected

521a — 522a

523a — 524a

500a

521b — 522b

523b — 524b

500b

# FIG. 14

START — S

SCREEN/MARKER DETECTION PROCESS — S1100

OPERATION CONTROL PROCESS — S1200

SHARPNESS VALUE CALCULATION PROCESS — S1300

ZOOM/POSITION ADJUSTMENT PROCESS — S1350

IMAGE SIZE/POSITION ADJUSTMENT PROCESS — S1400

END — E

## INTERNATIONAL SEARCH REPORT

| International application No. |
| --- |
| **PCT/KR2022/018001** |

**A. CLASSIFICATION OF SUBJECT MATTER**

**H04N 9/31**(2006.01)i; **G03B 21/14**(2006.01)i; **G06T 7/13**(2017.01)i

According to International Patent Classification (IPC) or to both national classification and IPC

**B. FIELDS SEARCHED**

Minimum documentation searched (classification system followed by classification symbols)

H04N 9/31(2006.01); G02B 7/28(2006.01); G03B 21/00(2006.01); G03B 21/14(2006.01); G03B 21/56(2006.01); G09G 3/20(2006.01); H04B 1/40(2006.01); H04N 3/23(2006.01); H04N 5/74(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 프로젝터(projector), 거리(distance), Time of Flight(ToF), 스크린(screen), 선예도(sharpness), 초점(focus), 신뢰도(reliability), 딥러닝(deep learning), 마커(marker), 패턴(pattern), 코너(corner), 프리-와핑(pre-warping)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2010-230864 A (TOSHIBA CORP.) 14 October 2010 (2010-10-14)<br>See paragraphs [0023], [0041] and [0056]; and claims 4-5. | 1,5,8-10,12-13,15-16,19-20 |
| A | | 2-4,6-7,11,14,17-18 |
| Y | KR 10-2018-0121100 A (SK TELECOM CO., LTD.) 07 November 2018 (2018-11-07)<br>See claims 1, 7 and 9-10. | 1,5,8-10,12-13,15-16,19-20 |
| Y | WO 01-47259 A1 (JUSTSYSTEM CORPORATION et al.) 28 June 2001 (2001-06-28)<br>See claims 1 and 4. | 8-10,12-13,15,19-20 |
| A | JP 2007-264335 A (CASIO COMPUT CO., LTD.) 11 October 2007 (2007-10-11)<br>See claims 1-7. | 1-20 |

☑ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 May 2023** | **22 May 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2022/018001** |

**C.      DOCUMENTS CONSIDERED TO BE RELEVANT**

| Category* | Citation of document, with indication, where appropriate, of the relevant passages | Relevant to claim No. |
| --- | --- | --- |
| A | KR 10-2012-0042404 A (LG ELECTRONICS INC.) 03 May 2012 (2012-05-03)<br>See claims 1-16. | 1-20 |

Form PCT/ISA/210 (second sheet) (July 2022)

**INTERNATIONAL SEARCH REPORT**
Information on patent family members

International application No.

**PCT/KR2022/018001**

| Patent document cited in search report | | | Publication date (day/month/year) | Patent family member(s) | | | Publication date (day/month/year) |
|---|---|---|---|---|---|---|---|
| JP | 2010-230864 | A | 14 October 2010 | JP | 5157992 | B2 | 06 March 2013 |
| KR | 10-2018-0121100 | A | 07 November 2018 | KR | 10-2435398 | B1 | 24 August 2022 |
| WO | 01-47259 | A1 | 28 June 2001 | US | 6753907 | B1 | 22 June 2004 |
| JP | 2007-264335 | A | 11 October 2007 | JP | 5142349 | B2 | 13 February 2013 |
| KR | 10-2012-0042404 | A | 03 May 2012 | None | | | |

Form PCT/ISA/210 (patent family annex) (July 2022)